# EUROPEAN PATENT SPECIFICATION

(11) **EP 1 402 107 B1**
(45) Date of publication and mention of the grant of the patent: **03.05.2006**
(21) Application number: 02727799.5
(22) Date of filing: 14.06.2002
(51) Int. Cl.: D06Q 1/12, D06P 1/00, G02B 5/128

(54) **Method for making retroreflective fabrics**
Verfahren zur Herstellung von retroreflektiven Flächengebilden
Procédé de fabrication de tissus retroréfléchissants

(30) Priority: 16.06.2001 GB 0114738
(43) Date of publication of application: 31.03.2004
(73) Proprietor: Reflec PLC, Winsford, Cheshire CW7 3QQ (GB)
(72) Inventor: WHITE, Peter Alan, Altrincham Cheshire WA14 2LG (GB); SLEEMAN, Michael John, Cheshire CW4 7HQ (GB); SMITH, Peter, Richard, Avon, CT 06001 (US); SAGAR, Brian The Cottage, Cheshire SK8 5HJ (GB)
(74) Representative: Robertson, James Alexander
(86) International application number: PCT/GB2002/002777
(87) International publication number: WO 2002/103108

(56) References cited:
- WO-A-00/42113
- WO-A-92/07990
- WO-A-94/25666
- WO-A-97/10522
- US-A- 4 102 562

## Description

This invention relates to methods for making retroreflective fabrics.

Retroreflective fabrics are made by printing or coating on to a fabric a retroreflective ink or coating. In some such fabrics, the ink coating contains microbeads hemispherically coated with aluminium. During the printing or coating the microbeads are randomly aligned with only a proportion of them so disposed as to be capable of retroreflectivity.

The beads not so disposed are, in effect, wasted and also have a deleterious effect on the daylight appearance of the fabric, tending to give a grey cast to it.

Tapes, capable of a greater degree of retroreflectivity, are made by embedding microbeads in an adhesive layer on a backing and metallising the exposed hemispheres of the microbeads, then transferring the microbeads to an adhesive coated tape so that the metallised surfaces are embedded in the adhesive in the tape, the microbeads now being all aligned and all contributing substantially 100% to the retroreflectivity. Retroreflective tape, whilst being useful in many applications, is, however, of limited usefulness.

The present invention provides methods for making retroreflective fabrics that have the degree of retroreflectivity of a tape, or at least much more nearly so than conventional ink-printed or coated fabrics, whilst being more generally useful.

According to the invention, a method for making a retroreflective fabric comprises the steps as defined in claim 1 appended hereto.

Preferred optional features of the method of the invention are as defined in claims 2 to 20 appended hereto. In addition:

The fabric may be one which is breathable, the term "breathable" referring to the ability of the fabric to allow the passage of air or other gases or moisture to pass through the fabric.

Additionally or alternatively, the fabric may be one which has moisture management properties. For example, the fabric may be one which is intended to move moisture away from its internal surface (for instance, a surface which may contact the skin of the wearer) by a mechanism such as a wicking action. The fabric may also permit rapid or gradual migration of moisture to the outer surface of the fabric in a controlled manner where evaporation will occur. The result of such moisture management is to keep the internal surface of the fabric substantially dry.

The present invention allows fabrics to be produced with highly reflective areas without unacceptably compromising the breathability and/or moisture management properties of the fabric.

The beads may be adhered to the fabric through a transfer adhesive, especially one which is not water based.

The fabric is typically at least 1 metre wide, e.g. about 1.5 metres wide.

The print or coating may be applied in a dot pattern or a reverse dot pattern. By a "dot pattern" is meant that the print or coating is applied in a pattern of dots, eg. circular, square, rectangular, triangular or other shaped dots separated by blank areas, while by a "reverse dot pattern" is meant that the printing or coating surrounds circular, square, rectangular, triangular or other shaped blank dots. This kind of printing or coating is in effect "solid", but leaves uncoated areas which enable the fabric to "breathe" and/or allow the moisture management, which is of general importance, but of particular importance in connection with clothing intended for use eg. by fire fighters and others working in hot environments. The print or coating may, of course, be rendered fire retardant or flame resistant and applied to a heat resistant fabric for such purposes.

Thus, in one implementation of the invention a fabric is produced which is breathable and/or has moisture management properties has adhered thereto, e.g. by a transfer adhesive, one or more arrays of dots each comprising a plurality of aligned, hemispherically coated retroreflective microbeads in such a way that the fabric is exposed for breathing/moisture management at interstices between the dots.

In another implementation of the invention, a breathable and/or moisture management fabric is produced, which has adhered thereto, e.g. by a transfer adhesive, one or more arrays of dots ("reverse dots") each comprising an area of fabric surrounded by an area of aligned, hemispherically coated retroreflective microbeads adhered to the fabric in such a way that the fabric is exposed for breathing/moisture management in the dot areas.

Typically within a particular array of dots or reverse dots present within a discrete pattern area on the fabric, the minimum area of exposed breathable and/or moisture management fabric within such pattern area is at least about 5%, e.g. at least about 10% and typically at least about 30%, of said pattern area. The maximum area of exposed breathable fabric within such discrete pattern area may be up to at least about 95%, e.g. at least up to about 90% and typically up to about 85% , of said pattern area.

The fabric may have a "daylight" print pattern different to the retroreflective pattern. In particular, the retroreflective pattern may be a solid or substantially solid overall print, with a "daylight" print pattern which is not overall or which is overall, but in different colours in different areas. Colour may be present in the bead areas.

The beads may have a pigment layer, which may comprise photo-luminescent or fluorescent pigment, or they may have a coloured film layer, or they may be embedded in a coloured adhesive layer.

The fabric may be provided with areas of unmetallised beads, which may comprise a colour system such as a pigment or film coating or a coloured embedding adhesive. Unmetallised beads may be backed by a reflective medium to import retroreflectivity.

The fabric may also comprise areas of non-aligned, hemispherically coated microbeads.

In a preferred embodiment of the method of the invention, the beads may be transferred in a dot pattern or a reverse dot pattern. The sheet, having had the beads transferred in the dot or reverse dot pattern, will have substantial numbers of beads left on it, and may be re-used for a second fabric (and a third, perhaps, and even a fourth, depending upon the numbers of beads removed each time), the pattern being selected to require bead transfer only from areas left beaded after said first fabric transfer. Such re-use of the transfer paper and/or salvaging of the beads can improve the economics of the method of the invention.

The beads may, in any event, be transferred selectively from the sheet to the fabric, even if not in dot or reverse dot pattern.

The fabric may be printed with a pattern of transfer adhesive and the sheet pressed against the fabric so that beads transfer from the sheet to the fabric, or the sheet may be printed with a pattern of transfer adhesive and pressed against the fabric so that beads transfer from the sheet to the fabric.

The transfer adhesive may be one which is activated by heat and the sheet and fabric pressed together with heat to activate the transfer adhesive.

The transfer adhesive may be non-water-based, e.g. a polyamide, plastisol or polyurethane adhesive that may cross-link at elevated temperature.

It has been found that using a transfer adhesive tends to have less of an adverse affect upon the moisture wicking ability of a fabric, compared with some water-based reflective inks, possibly because water-based inks tends to penetrate the fabric to a greater extent.

The sheet may comprise a substrate such as paper, e.g. Kraft paper.

The beads may be attached to the sheet by a linear low density polyethylene adhesive.

A thin primer may be applied over the metallised beads before transfer to the fabric.

When a sheet has been used for transfer printing, metallised beads may be recovered from it for use, eg. in inks. Bead recovery may be effected by bending the travelling sheet over a small radius, such as a small diameter roller or edge. The sheet may be chilled for this, which may embrittle or stiffen the adhesive and allow the beads to pop out as the adhesive gapes over the radius.

Embodiments of the method for making retroreflective fabrics according to the invention and apparatus for use in effecting same will now be described with reference to the accompanying drawings, in which:
Figure 1 is a face-on view of one embodiment of a retroreflective fabric made according to the invention;
Figure 2 is a cross-section through the fabric of Figure 1;
Figure 3 is a view like Figure 1 of another embodiment of fabric;
Figure 4 is a view like Figure 1 of another embodiment of fabric;
Figure 5 is a flow diagram illustrating how fabrics made according to the invention (and other fabrics) may be manufactured;
Figure 6 is a diagrammatic illustration of steps in the manufacture of a retroreflective fabric;
Figure 7 is a view of a partially unbeaded sheet after a first bead transfer operation showing an adhesive pattern for a second transfer,
Figure 8 is a diagrammatic section through a fabric having metallised and non-metallised bead areas and areas without beads; and
Figure 9 is a diagrammatic illustration of a bead recovery operation.

The drawings illustrate retroreflective fabrics 11 having a print or coating 12 having discrete retroreflective pattern areas 13 of aligned, hemispherically coated retroreflective glass microbeads.

As mentioned above, tapes, for application to clothing such as jackets and tabards to give night-time conspicuity by virtue of retroreflectivity, have long been made by embedding microbeads in an adhesive coating on a carrier so that they are hemispherically disposed, then metallising the exposed hemispheres of the microbeads, then transferring them *en masse* to an adhesive surface of a tape so that the beads are all aligned with their metallised hemispheres embedded in the adhesive matrix of the tape.

More recently, fabrics have been printed in patterns of retroreflective areas by incorporating hemispherically metallised microbeads in an ink which is used for printing more or less as a normal printing ink. Such fabrics are, however, significantly less retroreflective than the tapes because in the fabric the microbeads are not aligned, which has a deleterious effect on the daylight appearance of the fabric, tending to give a grey cast to it.

The retroreflective fabrics made according to the present invention, by contrast, can have, in their pattern areas, the kind of retroreflectivity associated with tapes.

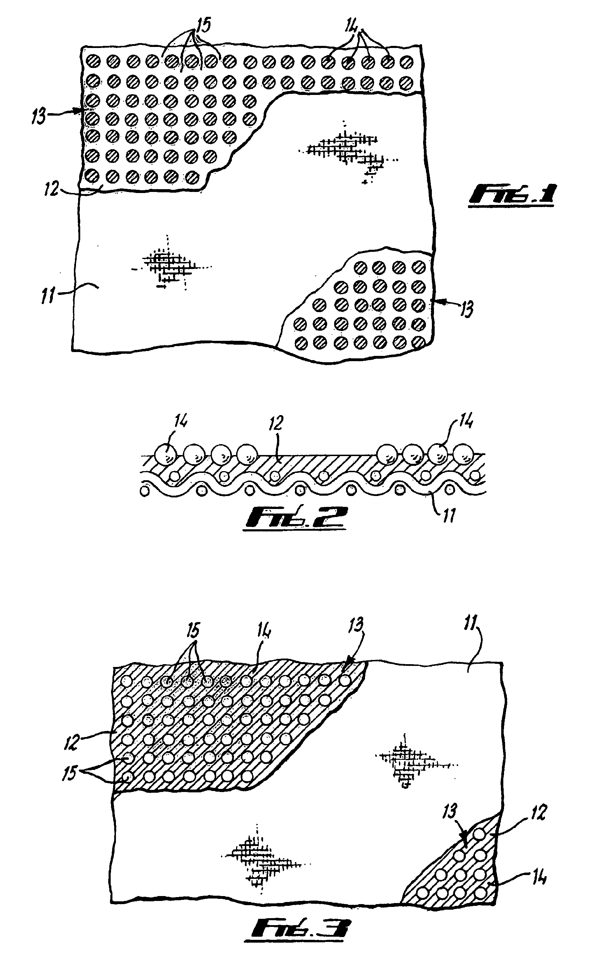

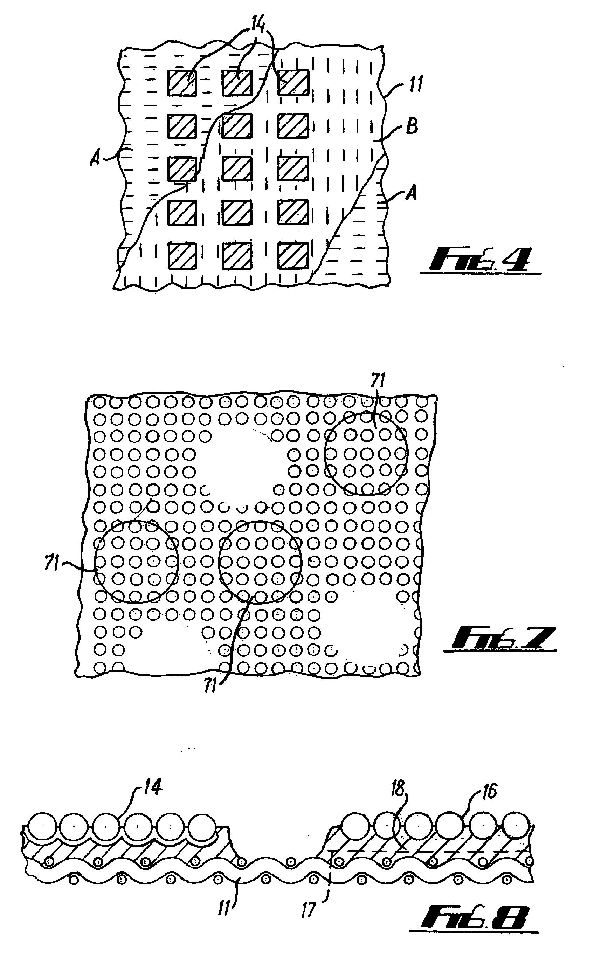

Figures 1 and 2 illustrate applying to a breathable and/or moisture management fabric 11 a print of the aligned retroreflective microbeads in a dot pattern, dots 14 of, say, millimetre or sub-millimetre dimensions, corresponding to the dots printed by a silk screen printing process, constituting the pattern areas 13. Since the dots 14 are attached to the fabric 11 by adhesive, which tends not to be breathable, the areas 15 around the dots 14, being free of the adhesive, allow the fabric to breath and/or function for the purposes of moisture management.

It will be understood that each millimetre or sub-millimetre "printing" dot will contain perhaps several hundred light transmissive microbeads, which are typically sized in the range of 20 to 90 microns, e.g. usually about 60 microns.

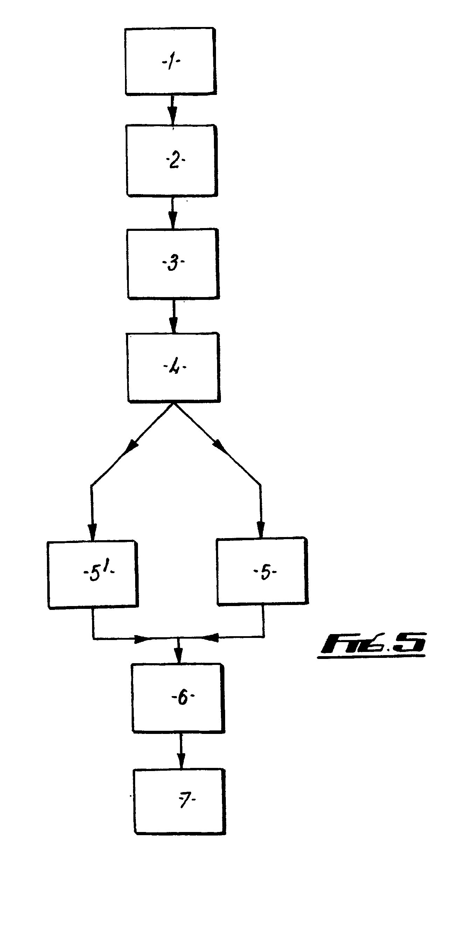

Figure 3 illustrates a fabric 11 with a reverse dot pattern, in which the bead-free areas 15 appear as dots surrounded by beaded area 14 in the pattern areas 13.

Colour can be present, in the usual way, of course, in the non-beaded areas, but also in the beaded areas. The beads may be applied, for example, to an already printed or coloured fabric 11. For colour in the beaded areas, the beads themselves may be covered in a pigment layer, which may contain a fluorescent or photo-luminescent pigment, especially for daytime conspicuity, or a "day-glow" type of colouration, or have a coloured film layer. The beads may be embedded in a coloured adhesive layer of the fabric.

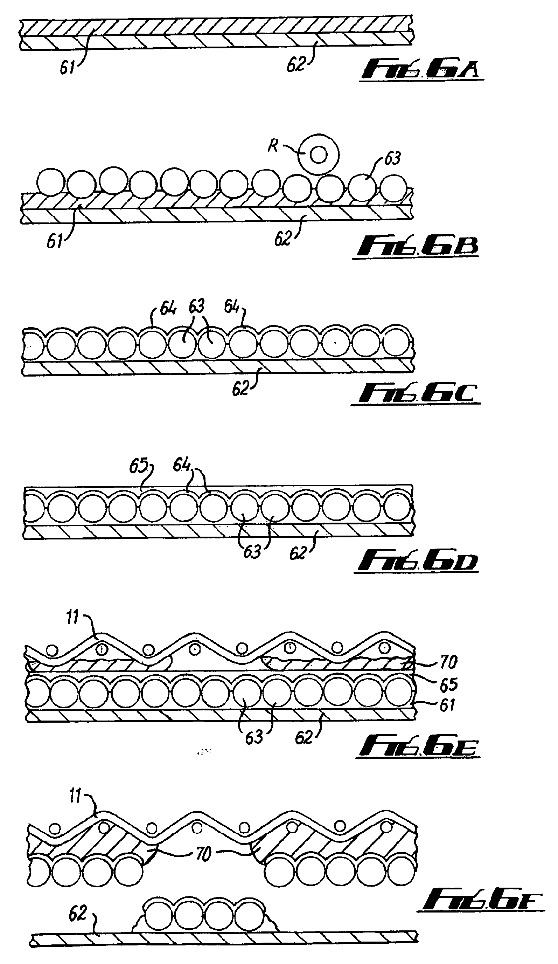

Figure 4 illustrates a fabric 11 with a retroreflective (this time square) dot pattern and a distinct colour pattern (depicted by areas A, B) which may have been preprinted before application of the retroreflective dot areas.

Figure 8 illustrates a breathable and/or moisture management fabric 11 having, in addition to metallised beaded areas 14, also areas 16 of non-metallised glass beads which, optionally, are rendered retroreflective by having reflective particles such as metal or mica flake 17 embedded in the adhesive layer 18 attaching the beads to the fabric 11.

The non-metallised beads can, of course, have a colour system which can be any of the systems that can be used for the metallised beads. The fabric 11 may also have areas of non-aligned, hemispherically coated retroreflective microbeads - these can be printed on as retroreflective ink in what is by now the usual way.

The fabric 11 may be a fire-retardant fabric such as a Nomex® fabric or one treated with a fire retardant such as Proban®, and the adhesive systems/inks used on the fabric may also be fire-retardant or flame resistant.

Protective clothing made of such materials, especially when made breathable and/or capable of moisture management by discontinuous, eg. dot or reverse dot pattern printing, are especially beneficial since by virtue of the highly retroreflective, aligned microbead areas, they have very good retroreflectivity, and they can by virtue of other colouration be given daytime conspicuity which is not compromised by relatively inefficient areas of non-aligned microbeads which tend to give a grey cast to the fabric in daylight conditions. Of course, as mentioned above, such non-aligned bead areas can be incorporated for special effects, eg. to give contrasting levels of retroreflectivity.

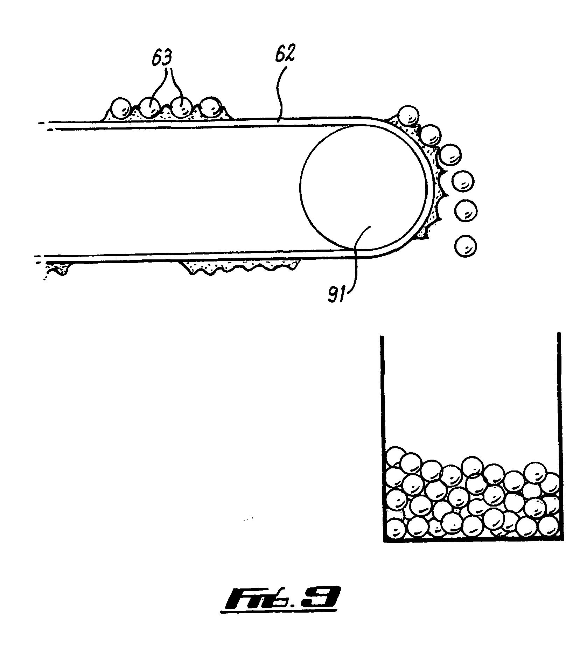

Figure 5 is a flow diagram showing the manufacturing process for fabrics according to the invention, and Figure 6 shows cross sections of the materials involved at various stages.

Step 1 is to apply an adhesive layer 61 to a substrate or carrier such as Kraft paper 62 (see Figure 6A). A suitable adhesive for layer 61 is a linear low density polyethylene (LLDPE). The thickness of the adhesive layer 61 is substantially one half of the bead diameter, the beads 63 themselves being of a substantially uniform diameter - beads referred to as "2F2S" ie. twice fired twice sieved, are especially appropriate.

The beads 63 may be prior-treated in various ways to ensure good metal-to-bead adhesion, for example. Step 2 involves scattering of the beads 63 on to the adhesive layer 61 and levelling them to a uniform, semi-embedded monolayer by a roller R - illustrated only diagrammatically in Figure 6B. If desired, the beads may be applied to the carrier in the manner described in our prior International Application No. WO 00/54079.

In Step 3, the exposed bead surfaces are metallised in the usual way, so that each microbead 63 now has a retroreflective layer of aluminium 64 over half its surface (Figure 6C). The metallisation may be carried out selectively, e.g. according to a predetermined pattern, so that in some areas the beads are metallised and in other areas they are not. In this way, when applied to the fabric, areas of dots consisting of metallised beads and areas of dots consisting of non-metallised beads are obtained. The non-metallised beads may be associated with colourant (e.g. provided on the beads themselves or in the binder adhering the beads to the fabric) and/or reflective material, such as mica or metal (e.g. aluminium) flakes or particles, which may be incorporated in the binder adhering the beads to the fabric. In this way, contrasts in reflectivity and colouration may be achieved.

In Step 4, a thin primer layer 65 is applied to the surface of the beads 63 - see Figure 6D.

At this point, there are alternatives.

At Step 5, adhesive 70 may be applied in a pattern to the primer layer 65, as by screen printing so as to result in pattern areas of dots as referred to above. However, an adhesive may instead be applied overall, and then printed in a pattern, again, eg. of dots as by a screen printing operation, with an ink that "kills" the adhesive. The first of these possibilities will result in transfer of microbeads, subsequently, to the adhesive dots, to result in a dot pattern of microbeads, the second will result in the production of a reverse dot pattern in which the dots are free of microbeads but are surrounded by areas covered in microbeads.

Instead of applying adhesive 70 to the primer-covered bead layer, adhesive may - Step 5' - be applied to a fabric to which the beads are to be transferred. Again, the adhesive may be applied in a dot pattern, or instead, applied overall (at least in areas intended to be retroreflective) and overprinted with a dot pattern of ink, to give a dot pattern or a reverse dot pattern of retroreflective areas respectively.

The adhesive to be applied to the Kraft paper or the fabric to be printed may be a polyamide, plastisol or polyurethane adhesive which may cross-link on application of heat, for improved washability of the fabric.

Bead transfer - Step 6 -is effected under heat and pressure, eg. by bringing the bead-carrying carrier 62 and fabric 11 together between heated rollers to produce the composite illustrated in Figure 6E. The carrier is subsequently stripped from the fabric (Step 7) to leave the microbeads adhered by adhesive 70 to the fabric 11 in the desired dot or reverse dot pattern (see Figure 6F). The process can for instance be run with a 152.4 cm (60 inch) wide fabric on a reel to reel basis.

Except for any desired after-treatments, the fabric is now finished though other printing, the application of retroreflective ink printing and/or the application of non-metallised bead areas can if desired be effected at this stage.

The Kraft paper, however, may still have copious microbead coverage, and can be re-used, possibly three or more times, depending on how many beads are transferred at each use, to produce another fabric, by displacing the print pattern to utilise the remaining microbeads. Figure 7 shows a partially unbeaded paper with areas 71 from which further beads may be removed in a second transfer operation.

Prior to or after transfer of beads from the transfer paper to the fabric, it is possible to apply coloured adhesive to the transfer paper in areas in which the beads are absent (or removed by transfer), to allow the production of solid areas or patterns of coloured non-reflective adhesive to be transferred to the fabric at the same time as bead transfer is effected.

Even when there are too few microbeads left to make further transfer feasible, the remaining beads can be recovered as illustrated in Figure 9. The paper, beaded side out, is coated to stiffen up the adhesive and run over a small radius such as roller 91, which causes the beads to pop out of their "sockets" in the adhesive for collection and re-use in inks.

It is possible to make a double-sided retroreflective fabric by applying adhesive to both faces of a fabric, or to two transfer sheets, and applying two transfer sheets simultaneously to opposite faces of the fabric. Of course, in the same way, the fabric may be made retroreflective on one face, and otherwise printed on the other face, in each case by transfer printing.

## Claims

1. A method for making a retroreflective fabric, comprising the steps of:
(i) producing a sheet having a layer of microbeads hemispherically metallised on their faces away from the sheet; and
(ii) transferring said metallised beads to a fabric, metallised face to said fabric, in pattern areas;
and performing at least one of the steps of:
(a) re-using said sheet for at least one additional transfer of said metallic beads to a further fabric or to a different section of said fabric, a transfer pattern being selected to require bead transfer only from areas of said sheet left beaded after said at least one previous transfer; and
(b) after said at least one transfer, recovering beads from said sheet.

2. A method according to claim 1, in which said beads are transferred in a dot pattern or a reverse dot pattern.

3. A method according to claim 1, in which said transfer is effected through adhesive applied to said layer of microbeads on said sheet or to said fabric in such a way that said transfer is effective to apply said microbeads to said fabric to produce at least one patterned area in which parts of said fabric are exposed for at least one of the group consisting of: breathing and moisture management.

4. A method according to any of the preceding claims, in which said beads are transferred selectively from said sheet to said fabric.

5. A method according to any of the preceding claims, in which said fabric is printed with a pattern of transfer adhesive and said sheet is pressed against said fabric so that beads transfer from said sheet to said fabric.

6. A method according to any of claims 1-4, in which said sheet is printed with a pattern of transfer adhesive and pressed against said fabric so that beads transfer from said sheet to said fabric.

7. A method according to either of claims 5 or 6, in which said transfer adhesive is a heat activated transfer adhesive, and said sheet and said fabric are pressed together with heat to activate said transfer adhesive.

8. A method according to any of the preceding claims, in which said transfer adhesive is a polyurethane, polyamide or plastisol adhesive.

9. A method according to claim 8, in which said transfer adhesive is a polyurethane or polyamide adhesive that cross-links at elevated temperature.

10. A method according to any of the preceding claims, in which said sheet comprises a paper substrate.

11. A method according to any of the preceding claims, in which said metallised beads are attached to said sheet by a linear low density polyethylene adhesive.

12. A method according to any of the preceding claims, in which a thin primer is applied over said metallised beads before transfer to said fabric.

13. A method according to claim 1, in which bead recovery is effected by bending said sheet, whilst travelling, over a small radius.

14. A method according to claim 13, in which said sheet is chilled for said small radius bending operation.

15. A method according to any of the preceding claims, in which said beads on said sheet are metallised selectively such that some beads are metallised and others are not.

16. A method according to claim 15, in which, following metallisation, said sheet carries areas of light transmissive beads which are metallised and areas of light transmissive beads which are not and in which both metallised and non-metallised beads are transferred to said fabric.

17. A method according to claim 16, in which said non-metallised beads are associated with at least one of the group consisting of: colorant and light reflective material.

18. A method according to claim 17, in which said at least one colorant and light reflective material is incorporated in an adhesive used to adhere said beads to said fabric.

19. A method according to any of the preceding claims, in which a non-water-based transfer adhesive is used for bead transfer to said fabric.

20. A method according to any of the preceding claims, said fabric being having a width selected from the group consisting of: at least 1 metre and about 1.5 metres.

## Patentansprüche

1. Verfahren zum Herstellen eines rückstrahlenden Flächengebildes, aufweisend die Schritte:
(i) Herstellen eines Blattes mit einer Schicht aus Mikroperlen, die halbkugelförmig auf ihrer dem Blatt abgewandten Fläche metallisiert sind; und
(ii) Übertragen der metallisierten Perlen auf ein Flächengebilde, die metallisierte Fläche zu dem Flächengebilde, in Musterbereichen;
und durchführend zumindest einen der Schritte:
(a) Wiederverwenden des Blattes für zumindest eine zusätzliche Übertragung der metallischen Perlen auf ein weiteres Flächengebilde oder auf einen verschiedenen Abschnitt des Flächengebildes, wobei ein Übertragungsmuster ausgewählt wird für das Erfordernis einer Perlenübertragung nur von Bereichen des Blattes, die nach der zumindest einen vorhergehenden Übertragung mit Perlen versehen geblieben sind; und
(b) Wiedergewinnen von Perlen von dem Blatt nach der zumindest einen Übertragung.

2. Verfahren nach Anspruch 1, bei dem die Perlen in einem Punktmuster oder einem umgekehrten Punktmuster übertragen werden.

3. Verfahren nach Anspruch 1, bei dem die Übertragung durch Klebstoff bewirkt wird, der auf die Schicht von Mikroperlen auf dem Blatt oder das Flächengebilde in einer solchen Weise aufgebracht ist, dass die Übertragung wirksam ist, die Mikroperlen auf das Flächengebilde aufzubringen, um zumindest einen gemusterten Bereich zu erzeugen, in welchem Teile des Flächengebildes freigelegt sind für zumindest eine aus der Gruppe bestehend aus: Atmung und Feuchtigkeitsverwaltung.

4. Verfahren nach einem der vorhergehenden Ansprüche, bei dem die Perlen selektiv vom Blatt auf das Flächengebilde übertragen werden.

5. Verfahren nach einem der vorhergehenden Ansprüche, bei dem das Flächengebilde mit einem Muster von Übertragungsklebstoff bedruckt ist und das Blatt gegen das Flächengebilde so gedrückt wird, dass Perlen von dem Blatt auf das Flächengebilde übertragen werden.

6. Verfahren nach einem der Ansprüche 1-4, bei dem das Blatt mit einem Muster von Übertragungsklebstoff bedruckt ist und gegen das Flächengebilde so gedrückt wird, dass die Perlen von dem Blatt auf das Flächengebilde übertragen werden.

7. Verfahren nach einem der Ansprüche 5 oder 6, bei dem der Übertragungsklebstoff wärmeaktivierter Übertragungsklebstoff ist, und das Blatt und das Flächengebilde unter Erwärmung zusammengedrückt werden, um den Übertragungsklebstoff zu aktivieren.

8. Verfahren nach einem der vorhergehenden Ansprüche, bei dem der Übertragungsklebstoff Polyurethan-, Polyamid- oder Plasisol-Klebstoff ist.

9. Verfahren nach Anspruch 8, bei dem der Übertragungsklebstoff ein Polyurethan- oder Polyamid-Klebstoff ist, der bei erhöhter Temperatur vernetzt.

10. Verfahren nach einem der vorhergehenden Ansprüche, bei dem das Blatt ein Papiersubstrat aufweist.

11. Verfahren nach einem der vorhergehenden Ansprüche, bei dem die metallisierten Perlen durch einen linearen Polyethylen-Klebstoff geringer Dichte an dem Blatt angebracht werden.

12. Verfahren nach einem der vorhergehenden Ansprüche, bei dem ein dünner Primer vor der Übertragung auf das Flächengebilde auf die metallisierten Perlen aufgebracht wird.

13. Verfahren nach Anspruch 1, bei dem die Perlen-Wiedergewinnung durch Biegen des Blattes mit einem kleinen Radius während des Transports bewirkt wird.

14. Verfahren nach Anspruch 13, bei dem das Blatt für den Biegevorgang mit kleinem Radius gekühlt wird.

15. Verfahren nach einem der vorhergehenden Ansprüche, bei dem die Perlen auf dem Blatt selektiv so metallisiert sind, dass einige Perlen metallisiert sind und andere nicht.

16. Verfahren nach Anspruch 15, bei dem folgend der Metallisierung das Blatt Bereiche von lichtdurchlässigen Perlen trägt, die metallisiert sind, und Bereiche von lichtdurchlässigen Perlen, die es nicht sind, und bei dem sowohl metallisierte als auch nicht metallisierte Perlen zu dem Flächengebilde übertragen werden.

17. Verfahren nach Anspruch 16, bei dem die nicht metallisierten Perlen mit zumindest einem aus der Gruppe bestehend aus assoziiert sind: Färbemittel und lichtreflektierendes Material.

18. Verfahren nach Anspruch 17, bei dem das zumindest eine Färbemittel oder lichtreflektierende Material in einem Klebstoff aufgenommen ist, der zum Kleben der Perlen auf dem Flächengebilde verwendet wird.

19. Verfahren nach einem der vorhergehenden Ansprüche, bei dem ein Übertragungsklebstoff, der nicht auf Wasserbasis beruht, für die Perlenübertragung auf das Flächengebilde verwendet wird.

20. Verfahren nach einem der vorhergehenden Ansprüche, bei dem das Flächengebilde eine Breite aufweist, die ausgewählt ist aus der Gruppe bestehend aus: zumindest ein Meter und etwa 1,5 m.

## Revendications

1. Procédé de fabrication d'un tissu rétroréfléchissant, comprenant les étapes consistant à :
(i) produire une feuille ayant une couche de microbilles métallisées de manière hémisphérique sur leurs faces éloignées de la feuille ; et
(ii) transférer lesdites billes métallisées sur un tissu, face métallisée sur ledit tissu, dans des zones de dessin ;
et accomplir au moins une parmi les étapes consistant à :
(a) réutiliser ladite feuille pour au moins un transfert supplémentaire desdites billes métalliques sur un tissu supplémentaire ou sur une section différente dudit tissu, un dessin de transfert étant sélectionné pour nécessiter un transfert de bille uniquement depuis les zones de ladite feuille où des billes ont été laissées après ledit au moins un transfert précédent ; et
(b) après ledit au moins un transfert, récupérer les billes de ladite feuille.

2. Procédé selon la revendication 1, dans lequel lesdites billes sont transférées selon un dessin de points ou un dessin de points inversés.

3. Procédé selon la revendication 1, dans lequel ledit transfert est effectué au moyen d'un adhésif appliqué sur ladite couche de microbilles sur ladite feuille ou sur ledit tissu de telle sorte que ledit transfert soit efficace pour appliquer lesdites microbilles sur ledit tissu afin de produire au moins une zone dessinée dans laquelle des parties dudit tissu sont exposées pour répondre à au moins une fonction parmi le groupe constitué de la gestion de la respiration et de l'humidité.

4. Procédé selon l'une quelconque des revendications précédentes, dans lequel lesdites billes sont transférées de manière sélective de ladite feuille audit tissu.

5. Procédé selon l'une quelconque des revendications précédentes, dans lequel ledit tissu est imprimé avec un dessin d'adhésif de transfert et ladite feuille est pressée contre ledit tissu de sorte que les billes soient transférées de ladite feuille audit tissu.

6. Procédé selon l'une quelconque des revendications 1 à 4, dans lequel ladite feuille est imprimée avec un dessin d'adhésif de transfert et pressée contre ledit tissu de sorte que les billes soient transférées de ladite feuille audit tissu.

7. Procédé selon l'une quelconque des revendications 5 ou 6, dans lequel ledit adhésif de transfert est un adhésif de transfert activé à chaud, et ladite feuille et ledit tissu sont pressés ensemble à chaud pour activer ledit adhésif de transfert.

8. Procédé selon l'une quelconque des revendications précédentes, dans lequel ledit adhésif de transfert est un adhésif polyuréthanne, polyamide, ou plastisol.

9. Procédé selon la revendication 8, dans lequel ledit adhésif de transfert est un adhésif polyuréthanne ou polyamide qui réticule à température élevée.

10. Procédé selon l'une quelconque des revendications précédentes, dans lequel ladite feuille comprend un substrat papier.

11. Procédé selon l'une quelconque des revendications précédentes, dans lequel lesdites billes métallisées sont attachées à ladite feuille par un adhésif polyéthylène linéaire de faible densité.

12. Procédé selon l'une quelconque des revendications précédentes, dans lequel une couche primaire mince est appliquée sur lesdites billes métallisées avant transfert sur ledit tissu.

13. Procédé selon la revendication 1, dans lequel on effectue la récupération de bille en repliant ladite feuille, tandis qu'elle se déplace, de façon à former un faible rayon.

14. Procédé selon la revendication 13, dans lequel ladite feuille est refroidie pour ladite opération consistant à replier de façon à former un faible rayon.

15. Procédé selon l'une quelconque des revendications précédentes, dans lequel lesdites billes sur ladite feuille sont métallisées de manière sélective de telle sorte que certaines billes soient métallisées et que d'autres ne le soient pas.

16. Procédé selon la revendication 15, dans lequel, après métallisation, ladite feuille porte des zones de billes à émission de lumière qui sont métallisées et des zones de billes à émission de lumière qui ne le sont pas et dans lequel on transfert à la fois des billes métallisées et des billes non métallisées sur ledit tissu.

17. Procédé selon la revendication 16, dans lequel lesdites billes métallisées sont associées à au moins un matériau parmi le groupe constitué d'un matériau colorant et d'un matériau réfléchissant.

18. Procédé selon la revendication 17, dans lequel ledit au moins un matériau colorant et réfléchissant est incorporé dans un adhésif utilisé pour coller lesdites billes sur ledit tissu.

19. Procédé selon l'une quelconque des revendications précédentes, dans lequel un adhésif de transfert non-aqueux est utilisé pour le transfert de bille sur ledit tissu.

20. Procédé selon l'une quelconque des revendications précédentes, dans lequel ledit tissu a une largeur sélectionnée dans le groupe constitué d'une largeur d'au moins 1 mètre et d'une largeur d'environ 1,5 mètre.
